# EUROPEAN PATENT SPECIFICATION

(11) **EP 2 427 029 B1**
(45) Date of publication and mention of the grant of the patent: **04.04.2018**
(21) Application number: 10809468.1
(22) Date of filing: 21.04.2010
(51) Int. Cl.: H04W 88/08

(54) **METHOD FOR ACQUIRING ADJACENT ENB INFORMATION AND MOBILE MANAGEMENT ENTITY**
VERFAHREN ZUR ERFASSUNG VON INFORMATION ÜBER BENACHBARTE ENBS UND MOBILGERÄTEEINHEIT
PROCÉDÉ D'ACQUISITION D'INFORMATIONS DE ENB ADJACENT, ET ENTITÉ DE GESTION DE MOBILITÉ

(30) Priority: 19.08.2009 CN 200910168573
(43) Date of publication of application: 07.03.2012
(73) Proprietor: ZTE Corporation, Shenzhen, Guangdong 518057 (CN)
(72) Inventor: SUN, Lianqiao, Shenzhen Guangdong 518057 (CN)
(74) Representative: Tafjord, Harald
(86) International application number: PCT/CN2010/071956
(87) International publication number: WO 2011/020335

(56) References cited:
- CN-A- 101 242 353
- CN-A- 101 370 249
- US-A1- 2009 111 503
- ALCATEL-LUCENT: "Self-configuration of transport layer addresses", 3GPP DRAFT; R3-082479_ADDRESS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080924, 24 September 2008 (2008-09-24), XP050323767, [retrieved on 2008-09-24] -& ALCATEL-LUCENT: "Self-Configuration of transport layer addresses", 3GPP DRAFT; R3-082480_ADDRESSCR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080924, 24 September 2008 (2008-09-24), XP050323768, [retrieved on 2008-09-24] -& "3rd Generation Partnership Project; Technical Specification Group Radio Access Network; Evolved Universal Terrestrial Radio Access (E-UTRA) and Evolved Universal Terrestrial Radio Access Network (E-UTRAN
- ERICSSON: "Discussion on Automatic Neighbour Relation Lists for LTE", 3GPP DRAFT; S5-070962 E DISCUSSION ON AUTOMATIC NEIGHBOR RELATION LISTS FOR LTE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Sophia Antipolis; 20070507 - 20070511, 29 April 2007 (2007-04-29), XP050643788, [retrieved on 2007-04-29]
- NOKIA ET AL: "Inter-RAT automatic neighbour cell determination", 3GPP DRAFT; R4-080241, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Sorrento, Italy; 20080205, 5 February 2008 (2008-02-05), XP050178880, [retrieved on 2008-02-05]
- T-MOBILE: "Draft LS on Inter-RAT/frequency Automatic Neighbour Relation Function", 3GPP DRAFT; R3-072376, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20071112, 12 November 2007 (2007-11-12), XP050163153, [retrieved on 2007-11-12]

## Description

### Technical Field

The present invention relates to the Long Term Evolution (LTE) system, and more especially, to a method for acquiring neighbour E-UTRAN Node B (eNB) information and a Mobile Management Entity (MME).

### Background of the Related Art

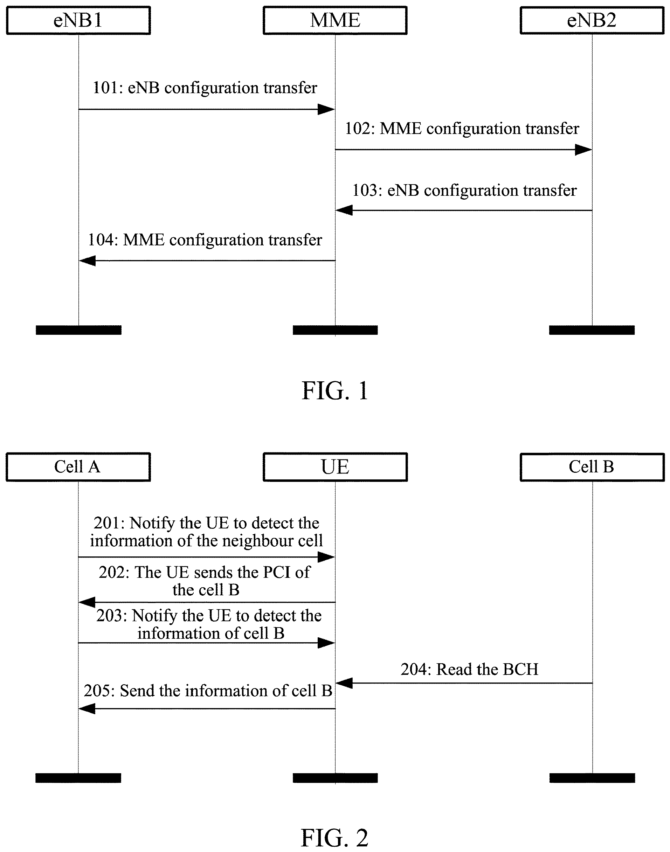

In the LTE system, the method for automatically acquiring the transmission address information of the counterpart eNB and establishing an X2 interface connection is as follows, as shown in FIG. 1:
Step 101: eNB1 acquires information of the Global eNB ID and the tracking area identity (TAI) of the eNB2, and the eNB1 sends an eNB Configuration Transfer to the MME, and fills the information of the eNB1 into the Source eNB-ID and the information of the eNB2 into the Target eNB-ID, and selects the self-organized network (SON) information as the SON information request;
Step 102, after the MME receives this message, it judges that the type of SON Information is SON information request, then the MME transmits this message transparently to the eNB2 at the target side, and the message name is MME Configuration Transfer;
Step 103, after the eNB2 receives this message, it organizes and sends an eNB Configuration Transfer to the MME, and the SON information in the message is selected as a SON Information Reply, and fills the IP address of the connection with X2 interface of eNB1 at the source side into the SON Information Reply;
Step 104, After the MME receives the message, it judges that the SON information is a SON information reply, then MME transfers this message transparently to the eNB1 at the source side, and the message name is the MME configuration transfer; after the eNB1 at the source side receives this message, it acquires the IP address of the X2 interface connection of the eNB2 at the target side, and then the Stream Control Transmission Protocol (SCTP) layer can create this coupling.

There are two methods about how to acquire the information of the counterpart so as to acquire the IP address:
1. Via the background configuration.
2. Via the Automatic Neighbour Relation (ANR) function.

The ANR function is described briefly below:
The ANR function is located within the eNB and manages the Neighbour Relation Table (NRT) in concept. The ANR function comprises the neighbour detection function that is able to find out new neighbour cells and add them to the NRT. The ARN function also comprises Neighbour deletion function that is able to delete the expired neighbour cell relation. Both the neighbour detection function and the neighbour deletion function belong to the content implemented by the manufacturers.

The Neighbour Cell Relation (NR) defined in the ANR is as follows:
The NR existing between the serving cell and the target cell means that the source cell controlled by the eNB knows the E-UTRAN Cell Global Identifier (ECGI) / the Cell Global Identifier (CGI) and the Physical Cell Identifier (PCI) of the target cell; said source cell exists in the NRT to identify records of the target cell; said source cell contains the attribute defined in the NRT, and the Operation, Administration and Maintenance (OAM) function is used to set or directly configure a default attribute value.

For each cell in the eNB, the eNB maintains and manages the corresponding NRT table, and for each NR, the NRT comprises the Target Cell ID (TCI). For the E-UTRAN cell, the TCI represents ECGI and PCI of the E-UTRAN target cell.

The neighbour cell automatic generation and optimization are divided into the following two scenarios:
1) Intra-LTE/frequency Automatic Neighbour Relation Function
2) Inter-RAT/Inter-frequency Automatic Neighbour Relation Function

The solution of the first scenario is as follows:
The realization of ANR function is shown in FIG. 2:
   Step 201, the serving cell A of the eNB has the ANR function and works as a part of normal call process, and the eNB notifies each user equipment (UE) to measure the neighbour cell; the eNB use different strategies to notify the UE to perform the measurement and when to report the measurement result;
   Step 202, the UE sends the measurement result related to the cell B, and this result comprises the PCI instead of the ECGI of the cell B; When the eNB receives a measurement report containing the PCI sent by the UE, proceed to the next step;
   Step 203, the eNB notifies the UE and uses the newly discovered physical cell ID (namely, ID of the cell B) as a parameter to read the ECGI, the Tracking Area Code (TAC) and all available Public Land Mobile Network (PLMN) IDs of the relevant neighbour cell; therefore, the eNB needs to schedule an appropriate idle cycle to allow the UE to read the measured ECGI of the neighbour cell;
   Step 204, the UE acquires the ECGI of the cell B by reading the Broadcast Channel (BCH);
   Step 205, the UE reports the acquired ECGI of the cell B to the eNB of the cell A.

The eNB decides to join in the neighbour cell relation and uses the PCI and the ECGI:
a, find the transport layer address of the new eNB;
b, update its NR list;
c, if necessary, establish an X2 interface connection with the new eNB.

For the second scenario:
Since the X2 interface is only defined in the E-UTRAN, the Inter-RAT situation is not considered, and only the inter-frequency situation is concerned here. The whole process is similar to the first scenario and is not described in detail here.

If necessary in the inter-frequency scenario, the eNB can use the information detected by UE to establish a new X2 interface connection.

In summary, the two methods in the prior art have the following problems:
the method using the background configuration hands the tedious work of configuring the neighbour eNB information to the operator;
the method of acquiring the IP address via the ANR makes the UE interacts with the eNB very frequently for neighbour cell detection, which increases the air interface overhead.

The document ALCATEL-LUCENT: "Self-configuration of transport layer addresses", 3GPP DRAFT; R3-082479_ADDRESS, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. Prague, Czech Republic; 20080924, 24 September 2008 discloses a mechanism, which would allow to resolve the two open issues of the ANR function, namely the address lookup in a multivendor environment and the population of the TLA lookup table.

The document ALCATEL-LUCENT: "Self-Configuration of transport layer addresses", 3GPP DRAFT; R3-082480_ADDRESSCR, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. Prague, Czech Republic; 20080924, 24 September 2008 discloses Self-Configuration of transport layer addresses, the transport layer addresses are automatically exchanged with neighbours just after S1 setup time through two new class 2 S1 procedures UL/DL information transfer.

### Summary of the Invention

The technical problem to be solved by the present invention is to provide a method and system for acquiring the neighbour eNB information to solve the problem that it is relatively complicated to use the background manual configuration to acquire the neighbour eNB information and the acquiring the neighbour eNB information via the ANR will increase the air interface overhead in the prior art. The invention is defined in independent claims 1, 5, 7 and 9.

In order to solve the abovementioned technical problem, the present invention provides a method for acquiring the neighbour eNB information, and the method comprises:
In the process of an E-UTRAN node B (eNB) establishing an S1 interface connection with a Mobility Management Entity (MME), the MME sends information of global eNB ID and tracking area identity (TAI) of the neighbour eNB of said eNB to the eNB;
the eNB receives and acquires the information of the global eNB ID and the TAI of the neighbour eNB.

The abovementioned method might also have the following feature:
in the process of the eNB establishing an S1 interface connection with the MME, the step of the MME sending the information of the global eNB ID and the TAI of the neighbour eNB of said eNB to the eNB comprises:
   the eNB sending an S1 setup request;
   After the MME receives the S1 setup request, it returning an S 1 setup response to the eNB, and said S1 setup response carrying an information list of the global eNB ID and the TAI of the neighbour eNB of said eNB.

The abovementioned method might also have the following feature:
after the MME receives said S1 setup request, the method also comprises:
   the MME also sending a MME configuration update to the neighbour eNB of the eNB, wherein the MME configuration update comprises the information of the global eNB ID and TAI of the eNB.

The above method might also have the following feature:
the step of said eNB receiving and acquiring the information of the global eNB ID and the TAI of the neighbour eNB comprises: said eNB acquiring the information of the global eNB ID and the TAI of the neighbour eNB according to the received S 1 setup response,

The method also comprises:
the eNB constructing an eNB configuration transfer for each neighbour eNB and sending the eNB configuration transfer to the MME;
after the eNB receives a MME configuration transfer returned by the MME, it acquires an IP address of an X2 interface connection of the corresponding neighbour eNB from the MME configuration transfer.

The present invention also provides a method for acquiring neighbour E-UTRAN Node B (eNB) information, and the method comprises: after the eNB establishes an S1 interface connection with the MME, the MME sends a MME configuration update to the eNB, wherein the MME configuration update carries an information list of the global eNB ID and the TAI of the neighbour eNB of said eNB.

The above method might also have the following feature:
according to the received MME configuration update, said eNB acquires information of the global eNB ID and the TAI of the corresponding neighbour eNB, and constructs an eNB configuration transfer for each neighbour eNB and sends the eNB configuration transfer to the MME;
after the eNB receives the MME configuration transfer returned by the MME, it acquires an IP address of an X2 interface connection of the corresponding neighbour eNB from the MME configuration transfer.

In order to solve the abovementioned technical problem, the present invention also provides a MME for acquiring the neighbour eNB information,

Said MME is configured to: send information of the global eNB ID and the TAI of the neighbour eNB of the eNB to the eNB in the process of establishing an S 1 interface connection with the eNB.

The above MME might also have the following feature:
Said MME is configured to: after receiving an S1 setup request sent from the eNB, return an S 1 setup response to the eNB, wherein the S 1 setup response carries an information list carrying the information of the global eNB ID and the TAI of the neighbour eNB of the eNB.

The present invention also provides a mobile management entity (MME) for acquiring the neighbour eNB information,
said MME is configured to: send a MME configuration update to the eNB after the eNB establishes an S1 interface connection with the MME, wherein, the MME configuration update carries an information list of the information of the global eNB ID and the TAI of the neighbour eNB of the eNB that newly establishes the S 1 interface connection.

The above MME might also have the following feature:
said MME is also configured to:
   receive the eNB configuration transfer that is constructed by the eNB for each neighbour eNB according to the information of the global eNB ID and the TAI of the neighbour eNB and is sent to the MME;
   return the MME configuration transfer to the eNB so that the eNB is able to acquire an IP address of an X2 interface connection of the corresponding neighbour eNB from the MME configuration transfer.

With the present invention, it is able to acquire the information of the neighbour eNB of this eNB in the S 1 setup process; it might also acquire the information of the neighbour eNB via the MME configuration update and establish an X2 interface connection in time. Due to the setup of the X2 interface connection, it can acquire the information of the neighbour cell and the cell of the neighbour eNB. With the present invention, the operators are freed from the tedious work of manually configuring the neighbour eNB information, and the frequent interactions between the UE and the eNB for neighbour cell detection can be reduced.

### Brief Description of Drawings

FIG. 1 is a schematic diagram of the process of the eNB1 at the source side acquiring the transmission address information of the eNB2 at the target side in the related art;
FIG.2 is a schematic diagram of the Intra-LTE/frequency Automatic Neighbour Relation Function and optimization in the related art;
FIG. 3 is a flow chart of the eNB1 acquiring the neighbour eNB information when setting up the S 1 interface connection in accordance with an example of the present invention;
FIG. 4 is a flow chart of the eNB1 acquiring the neighbour eNB information when receiving the MME configuration update in accordance with an example of the present invention.

### Preferred Embodiments of the Present Invention

In the present invention, two methods are applied for the eNB acquiring the neighbour eNB information:
The first method, in the process of the eNB setting up an S 1 interface connection with the MME, the MME sends the information of the global eNB ID and the TAI of the neighbour eNB of said eNB to said eNB;
The second method, after the eNB sets up the S 1 interface connection with the MME, the MME sends the information of the global eNB-ID and the TAI of the neighbour eNB that newly sets up a S1 interface connection with the MME to the eNB.

In the following, the present invention will be illustrated in detail in combination with the accompanying figures and specific examples.

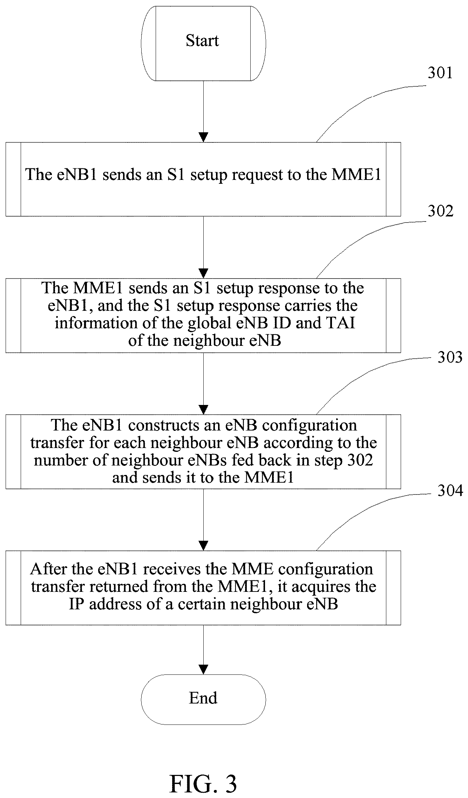

As shown in FIG. 3, it is a procedure of acquiring the information of the global eNB ID and the TAI of the neighbour eNB in the process of the eNB1 setting up the S1 interface connection with the MME1, wherein, the procedure comprises the following steps:
Step 301: the eNB1 sends an S1 setup request to the MME1;
Step 302: after the MME1 receives the S1 setup request from the eNB1, it returns an S1 setup response to the eNB1, and the S1 setup response carries both the cells included in the current protocol and an information list of the global eNB ID and TAI of the neighbour eNB of the eNB1;
   in this step, the MME1 sends a MME configuration update to the neighbour eNB of the eNB1, and said MME configuration update carries the information of the global eNB ID and the TAI of the eNB1; therefore, the neighbour eNB of the eNB1 can acquire the IP address of the X2 interface connection of the eNB1 according to the information of the global eNB ID and the TAI of the eNB1;
Step 303: the eNB1 receives the S1 setup response and acquires the information of the global eNB ID and the TAI of the neighbour eNB, and constructs an eNB configuration transfer for each neighbour eNB according to the number of neighbour eNBs fed back in step 302 and sends the eNB configuration transfer to the MME1;
Step 304: after the eNB1 receives the MME configuration transfer returned from the MME1, it acquires the IP address of the X2 interface connection of a certain neighbour eNB from the MME configuration transfer.

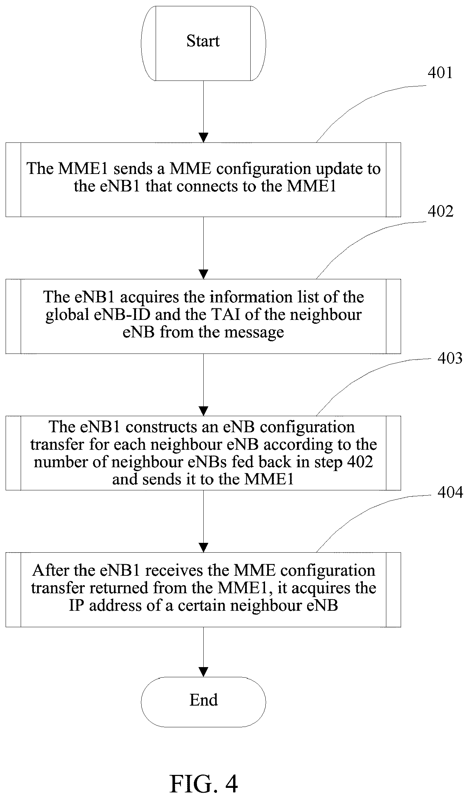

FIG. 4 is a flow chart of acquiring the information of the global eNB ID and the TAI of the neighbour eNB after the eNB1 sets up the S1 interface connection with the MME1, which comprises the following steps:
Step 401: the MME1 sends a MME configuration update to the eNB1, and said MME configuration update carries an information list of the global eNB ID and the TAI of the neighbour eNB that newly sets up an S1 interface connection with the MME1;
   since there is an eNB sending an S1 setup request to the MME1 and the eNB is a neighbour eNB of the eNB1, the MME1 sends the abovementioned MME configuration update to the eNB1;
Step 402: after the eNB1 receives the MME configuration update, it acquires the information list of the global eNB ID and the TAI of the neighbour eNB;
Step 403: the eNB1 constructs an eNB configuration transfer for each neighbour eNB according to the number of neighbour eNBs fed back in step 402, and sends it to the MME1;
Step 404: after the eNB1 receives the MME configuration transfer returned from the MME1, it acquires the IP address of the X2 interface connection of a certain neighbour eNB from the MME configuration transfer.

The system for acquiring the neighbour eNB information in accordance with the example of the present invention comprises a MME and an eNB.

Wherein, said MME is used to send the information of the global eNB ID and the TAI of the neighbour eNB of the eNB to the eNB in the process of setting up an S 1 interface connection with the eNB.

The eNB is used to receive and acquire the information of the global eNB ID and the TAI of the neighbour eNB.

Said MME is further used to: after receiving the S1 setup request sent from the eNB, return an S 1 setup response to the eNB, wherein the S 1 setup response carries the information list of the global eNB ID and the TAI of the neighbour eNB of the eNB.

Said MME is further used to send a MME configuration update to the eNB after the eNB sets up the S1 interface connection with the MME, wherein, the MME configuration update carries the information list of the global eNB ID and the TAI of the neighbour eNB of the eNB that newly sets up the S 1 interface connection.

Said eNB is further used to construct an eNB configuration transfer for each neighbour eNB according to the information of the global eNB ID and the TAI of the neighbour eNB, and send it to the MME; and, after receiving the MME configuration transfer returned by the MME, to acquire the IP address of the X2 interface connection of the corresponding neighbour eNB from the MME configuration transfer.

Of course that the present invention might also have a variety of other examples, and for those skilled in the field, various corresponding modifications and variations can be made according to the present invention without departing from the spirit and essence of the present invention, but all these corresponding modifications or variations should belong to the protection scope of the appended claims of the present invention.

### Industrial Applicability

With the present invention, it is able to acquire the information of the neighbour eNB of this eNB in the S1 setup process; it might also acquire the information of the neighbour eNB via the MME configuration update and establish an X2 interface connection in time. Due to the setup of the X2 interface connection, it can acquire the information of the neighbour cell and the cell of the neighbour eNB. With the present invention, the operators are freed from the tedious work of manually configuring the neighbour eNB information, and the frequent interactions between the UE and the eNB for neighbour cell detection can be reduced.

## Claims

1. A method for acquiring neighbour E-UTRAN Node B, eNB, information, comprising:
in a process of an eNB setting up an S 1 interface connection with a Mobile Management Entity, MME, the MME sending information of global eNB ID and tracking area identity, TAI, of a neighbour eNB of said eNB to the eNB;
the eNB receiving and acquiring the information of the global eNB ID and the TAI of the neighbour eNB.

2. The method of claim 1, wherein,
in the process of the eNB setting up the S 1 interface connection with the MME, the step of the MME sending the information of the global eNB ID and the TAI of the neighbour eNB of said eNB to the eNB comprises:
the eNB sending an S1 setup request to the MME (301);
after the MME receives the S 1 setup request, the MME returning an S 1 setup response to the eNB, and said S 1 setup response carrying an information list of the global eNB ID and the TAI of the neighbour eNB of said eNB (302).

3. The method of claim 2, wherein,
after the MME receives said S1 setup request, the method also comprises:
the MME also sending a MME configuration update to the neighbour eNB of the eNB, and the MME configuration update carrying the information of the global eNB ID and the TAI of the eNB.

4. The method of claim 2 or 3, wherein,
the step of said eNB receiving and acquiring the information of the global eNB ID and the TAI of the neighbour eNB comprises: said eNB acquiring the information of the global eNB ID and the TAI of the neighbour eNB according to the received S 1 setup response;
the method also comprises:
the eNB constructing an eNB configuration transfer for each neighbour eNB and sending the eNB configuration transfer to the MME (303);
after the eNB receives a MME configuration transfer returned by the MME, the eNB acquiring an IP address of an X2 interface connection of a corresponding neighbour eNB from the MME configuration transfer (304).

5. A method for acquiring neighbour E-UTRAN Node B, eNB, information, comprising:
after an eNB sets up an S 1 interface connection with a Mobile Management Entity, MME, the MME sending a MME configuration update to the eNB (401), and the MME configuration update carrying an information list of global eNB ID and tracking area identity, TAI, of a neighbour eNB of said eNB.

6. The method of claim 5, further comprising
according to the received MME configuration update, said eNB acquiring information of the global eNB ID and the TAI of a corresponding neighbour eNB (402), constructing an eNB configuration transfer for each neighbour eNB and sending the eNB configuration transfer to the MME (403);
after the eNB receives a MME configuration transfer returned by the MME, the eNB acquiring an IP address of an X2 interface connection of the corresponding neighbour eNB from the MME configuration transfer (404).

7. A Mobile Management Entity, MME, for acquiring neighbour E-UTRAN Node B, eNB, information,
said MME being configured to: send information of global eNB ID and tracking area identity, TAI, of a neighbour eNB of an eNB to the eNB in a process of setting up an S1 interface connection with the eNB.

8. The MME of claim 7, wherein,
said MME is configured to: after receiving an S1 setup request sent from the eNB, return an S1 setup response to the eNB, and the S 1 setup response carrying an information list of the global eNB ID and the TAI of the neighbour eNB of the eNB.

9. A Mobile Management Entity, MME, for acquiring neighbour E-UTRAN Node B, eNB, information,
said MME being configured to: send a MME configuration update to an eNB after the eNB sets up an S 1 interface connection with the MME, wherein, the MME configuration update carries an information list of global eNB ID and tracking area identity, TAI, of a neighbour eNB of the eNB that newly sets up the S 1 interface connection.

10. The MME of claim 9, wherein, said MME is also configured to:
receive an eNB configuration transfer that is constructed by the eNB for each neighbour eNB according to information of the global eNB ID and the TAI of the neighbour eNB and is sent to the MME;
return a MME configuration transfer to the eNB so that the eNB is able to acquire an IP address of an X2 interface connection of a corresponding neighbour eNB from the MME configuration transfer.

## Patentansprüche

1. Verfahren zum Erfassen von Nachbar-E-UTRAN-Node-B(eNB)-Informationen, umfassend:
in einem Prozess, in dem ein eNB eine S1-Schnittstellenverbindung mit einer Mobile Management Entity (MME) einrichtet, Senden durch die MME von Informationen der globalen eNB-ID und der Tracking Area Identity (TAI) eines Nachbar-eNB des eNB an den eNB;
Empfangen und Erfassen der Informationen der globalen eNB ID und der TAI des Nachbar-eNB durch den eNB.

2. Verfahren nach Anspruch 1,
wobei in dem Prozess, in dem der eNB die S1-Schnittstellenverbindung mit der MME einrichtet, der Schritt des Sendens der Informationen der globalen eNB ID und der TAI des Nachbar-eNB des eNB an den eNB durch die MME umfasst:
Senden einer S1-Setup-Anfrage an die MME durch den eNB (301);
nachdem die MME die S1-Setup-Anfrage empfangen hat, Zurücksenden einer S1-Setup-Antwort an den eNB durch die MME, wobei die S1-Setup-Antwort eine Informationsliste der globalen eNB-ID und der TAI des Nachbar-eNB des eNB enthält (302).

3. Verfahren nach Anspruch 2, wobei,
nachdem die MME die S1-Setup-Anfrage empfangen hat, das Verfahren auch umfasst:
zusätzliches Senden einer MME-Konfigurationsaktualisierung an den Nachbar-eNB des eNB durch die MME, wobei die MME-Konfigurationsaktualisierung die Informationen der globalen eNB-ID und der TAI des eNB enthält.

4. Verfahren nach Anspruch 2 oder 3, wobei
der Schritt des Empfangens und Erfassens der Informationen der globalen eNB-ID und der TAI des Nachbar-eNB durch den eNB umfasst: Erfassen der Informationen der globalen eNB-ID und der TAI des Nachbar-eNB gemäß der empfangenen S1-Setup-Antwort durch den eNB;
wobei das Verfahren ebenfalls umfasst:
Aufbauen einer Konfigurationsübertragung für jeden Nachbar-eNB durch den eNB und Senden der eNB-Konfigurationsübertragung an die MME (303);
nach Empfangen einer von der MME zurückgesendeten MME-Konfigurationsübertragung durch den eNB, Erfassen einer IP-Adresse einer X2-Schnittstellenverbindung eines entsprechenden Nachbar-eNB von der MME-Konfigurationsübertragung durch den eNB (304).

5. Verfahren zum Erfassen von Nachbar-E-UTRAN-Node-B(eNB)-Informationen, umfassend:
nachdem ein eNB eine S1-Schnittstellenverbindung mit einer Mobile Management Entity (MME) eingerichtet hat, Senden einer MME-Konfigurationsaktualisierung an den eNB durch die MME (401), wobei die MME-Konfigurationsaktualisierung eine Informationsliste von globaler eNB-ID und Tracking Area Identity (TAI) eines Nachbar-eNB des eNB enthält.

6. Verfahren nach Anspruch 5, ferner umfassend:
Erfassen von Informationen der globalen eNB ID und der TAI eines entsprechenden Nachbar-eNB durch den eNB (402), Aufbauen einer eNB-Konfigurationsübertragung für jeden Nachbar-eNB und Senden der eNB-Konfigurationsübertragung an die MME (403) gemäß der empfangenen MME-Konfigurationsaktualisierung;
nachdem der eNB eine von der MME zurückgesendete MME-Konfigurationsübertragung empfangen hat, Erfassen einer IP-Adresse einer X2-Schnittstellenverbindung des entsprechenden Nachbar-eNB von der MME-Konfigurationsübertragung durch den eNB (404).

7. Mobile Management Entity (MME) zum Erfassen von Nachbar-E-UTRAN-Node-B-(eNB)-Informationen,
wobei die MME dazu konfiguriert ist, in einem Prozess zum Einrichten einer S1-Schnittstellenverbindung mit dem eNB Informationen der globalen eNB-ID und der Tracking Area Identity (TAI) eines Nachbar-eNB eines eNB an den eNB zu senden.

8. MME nach Anspruch 7, wobei
die MME dazu konfiguriert ist, nach dem Empfangen einer vom eNB gesendeten S1-Setup-Antfrage eine S1-Setup-Antwort an den eNB zurückzusenden, wobei die S1-Setup-Antwort eine Informationsliste der globalen eNB-ID und der TAI des Nachbar-eNB des eNB enthält.

9. Mobile Management Entity (MME) zum Erfassen von Nachbar-E-UTRAN-Node-B(eNB)-Informationen,
wobei die MME dazu konfiguriert ist, eine MME-Konfigurationsaktualisierung an einen eNB zu senden, nachdem der eNB eine S1-Schnittstellenverbindung mit der MME eingerichtet hat, wobei die MME-Konfigurationsaktualisierung eine Informationsliste der globalen eNB-ID und der Tracking Area Identity (TAI) eines Nachbar-eNB des eNB enthält, der die S1-Schnittstellenverbindung neu einrichtet.

10. MME nach Anspruch 9, wobei die MME auch dazu konfiguriert ist:
eine eNB-Konfigurationsübertragung zu empfangen, die durch den eNB für jeden Nachbar-eNB gemäß Informationen der globalen eNB-ID und der TAI des Nachbar-eNB aufgebaut und an die MME gesendet wird;
eine MME-Konfigurationsübertragung an den eNB zurückzusenden, so dass der eNB imstande ist, eine IP-Adresse einer X2-Schnittstellenverbindung eines entsprechenden Nachbar-eNB von der MME-Konfigurationsübertragung zu erfassen.

## Revendications

1. Procédé d'acquisition d'informations relatives à l'E-UTRAN Node B, eNB, adjacent, comprenant :
durant l'établissement par l'eNB d'une connexion d'interface S1 avec une entité de gestion de mobilité (MME), l'envoi à l'eNB par la MME des informations relatives à l'ID globale de l'eNB et à l'identité de la zone de suivi, TAI, d'un eNB adjacent audit eNB ;
la réception et l'acquisition par l'eNB des informations relatives à l'ID globale de l'eNB et à la TAI de l'eNB adjacent.

2. Procédé selon la revendication 1, dans lequel,
durant l'établissement par l'eNB de la connexion d'interface S1 avec la MME, l'étape de l'envoi à l'eNB par la MME des informations relatives à l'ID globale de l'eNB et à la TAI de l'eNB adjacent audit eNB comprend :
l'envoi par l'eNB d'une demande d'établissement de S1 à la MME (301) ;
après que la MME a reçu la demande d'établissement de S1, le renvoi par la MME d'une réponse d'établissement de S1 à l'eNB, ladite réponse d'établissement de S1 portant une liste d'informations relatives à l'ID globale de l'eNB et à la TAI de l'eNB adjacent audit eNB (302).

3. Procédé selon la revendication 2, dans lequel
après que la MME a reçu ladite demande d'établissement de S1, le procédé comprend également :
l'envoi par la MME d'une mise à jour de la configuration de la MME à l'eNB adjacent à l'eNB, la mise à jour de la configuration de la MME portant des informations relatives à l'ID globale de l'eNB et à la TAI de l'eNB.

4. Procédé selon la revendication 2 ou 3, dans lequel
l'étape de réception et d'acquisition par ledit eNB des informations relatives à l'ID globale de l'eNB et à la TAI de l'eNB adjacent comprend : l'acquisition par ledit eNB des informations relatives à l'ID globale de l'eNB et la TAI de l'eNB adjacent selon la réponse d'établissement de S1 reçue ;
le procédé comprend également :
la réalisation par l'eNB d'un transfert de configuration de l'eNB pour chaque eNB adjacent et l'envoi du transfert de configuration de l'eNB à la MME (303) ;
après que l'eNB a reçu un transfert de configuration de la MME renvoyé par la MME, l'acquisition par l'eNB d'une adresse IP d'une connexion d'interface X2 d'un eNB adjacent correspondant à partir du transfert de configuration de la MME (304).

5. Procédé d'acquisition d'informations relatives à l'E-UTRAN Node B, eNB, adjacent, comprenant :
après qu'un eNB a établi une connexion d'interface S1 avec une entité de gestion de mobilité, MME, l'envoi par la MME d'une mise à jour de la configuration de la MME à l'eNB (401), la mise à jour de la configuration de la MME portant une liste d'informations relative à l'ID globale de l'eNB et à l'identité de la zone de suivi, TAI, d'un eNB adjacent audit eNB.

6. Procédé selon la revendication 5, comprenant en outre
selon la mise à jour de la configuration de la MME reçue, l'acquisition par ledit eNB d'informations relatives à l'ID globale de l'eNB et à la TAI d'un eNB correspondant adjacent (402), la réalisation d'un transfert de configuration de l'eNB pour chaque eNB adjacent et l'envoi du transfert de configuration de l'eNB à la MME (403) ;
après que l'eNB a reçu un transfert de configuration de la MME renvoyé par la MME, l'acquisition par l'eNB d'une adresse IP d'une connexion d'interface X2 de l'eNB adjacent correspondant à partir du transfert de configuration de la MME (404).

7. Entité de gestion de mobilité, MME, pour l'acquisition d'informations relatives à l'E-UTRAN Node B, eNB, adjacent,
ladite MME étant configurée de manière à : envoyer à l'eNB des informations relatives à l'ID globale de l'eNB et à l'identité de la zone de suivi, TAI, d'un eNB adjacent à un eNB durant l'établissement d'une connexion d'interface S1 avec l'eNB.

8. MME selon la revendication 7, dans laquelle
ladite MME est configurée de manière à : renvoyer, après avoir reçu la demande d'établissement de S1 envoyée par l'eNB, une réponse d'établissement de S1 à l'eNB, la réponse d'établissement de S1 portant une liste d'informations relatives à l'ID globale de l'eNB et à la TAI de l'eNB adjacent à l'eNB.

9. Entité de gestion de mobilité, MME, pour l'acquisition d'informations relatives à l'E-UTRAN Node B, ENB, adjacent,
ladite MME étant configurée de manière à : envoyer une mise à jour de la configuration de la MME à un eNB après que l'eNB a établi une connexion d'interface S1 avec la MME, la mise à jour de la configuration de la MME portant une liste d'informations relative à l'ID globale de l'eNB et à l'identité de la zone de suivi, TAI, d'un eNB adjacent à l'eNB qui vient d'établir la connexion d'interface S1.

10. MME selon la revendication 9, dans laquelle la MME est également configurée de manière à :
recevoir un transfert de la configuration de l'eNB qui est réalisé par l'eNB pour chaque eNB adjacent selon des informations relatives à l'ID globale de l'eNB et à la TAI de l'eNB adjacent et qui est envoyé à la MME ;
renvoyer un transfert de configuration de la MME à l'eNB de telle sorte que l'eNB soit en mesure d'acquérir une adresse IP d'une connexion d'interface X2 d'un eNB adjacent correspondant à partir du transfert de configuration de la MME.
